# EUROPEAN PATENT APPLICATION

(11) **EP 2 860 803 A1**
(43) Date of publication of application: **15.04.2015**
(21) Application number: 13804128.0
(22) Date of filing: 07.06.2013
(51) Int. Cl.: H01M 8/04, H01M 8/06, H01M 8/12

(54) **REFORMER SUPPORT STRUCTURE AND FUEL CELL MODULE**

(30) Priority: 11.06.2012 JP 2012132164
(71) Applicant: JX Nippon Oil & Energy Corporation, Chiyoda-ku Tokyo 100-8162 (JP)
(72) Inventor: YAMAMOTO, Satoru, Tokyo 100-8162 (JP); MIZUNO, Yasushi, Tokyo 100-8162 (JP); SHIBASAKI, Norihisa, Niigata city Niigata 950-1295 (JP); OGURO, Hiroki, Niigata city Niigata 950-1295 (JP)
(74) Representative: Kuhnen & Wacker
(86) International application number: PCT/JP2013/065867
(87) International publication number: WO 2013/187332

(57) **Abstract**

A reformer support structure for a fuel cell module (1) including a fuel cell body, which includes a cell stack (9) and a reformer (5) disposed above the cell stack (9), and a housing (2) which contains the fuel cell body (3) includes a first member (61) which includes a first engagement portion (61d) and is attached to the housing (2); and a second member (62) which includes a second engagement portion (62c) and is attached to the reformer (5). The reformer (5) is supported by the housing (2) by engaging the second engagement portion (62c) with the first engagement portion (61 d). An engagement part (6a) where the second engagement portion (62c) is engaged with the first engagement portion (61d) is provided above a bottom of the reformer (5). The second engagement portion (62c) is slidable on the first engagement portion (61d) in a direction of thermal expansion of the reformer (5). The reformer support structure can support the reformer stably.

## Description

### Technical Field

The present invention relates to a reformer support structure for a fuel cell, in particular, to a reformer support structure for supporting a reformer used in a fuel cell module and a fuel cell module provided with the reformer support structure.

### Background Art

There are known some kinds of power generation systems of a fuel cell. In recent years, a solid oxide fuel cell (SOFC) capable of achieving high power generation efficiency has received attention.

The major component or element of the solid oxide fuel cell (SOFC) system is a fuel cell module having a reformer, a fuel cell (fuel battery cell), and the like. The reformer reforms hydrogen-containing fuel such as hydrocarbon fuel to generate hydrogen-rich gas. The fuel cell has a structure that electrolyte is sandwiched between a fuel electrode (anode) and an oxidant electrode (cathode), and the fuel cell generates electricity through electrochemical reaction by use of the hydrogen-rich gas supplied from the reformer and an oxidizer such as air. Patent literatures 1 to 4 each disclose the fuel cell module having the reformer and the fuel cell as described above.

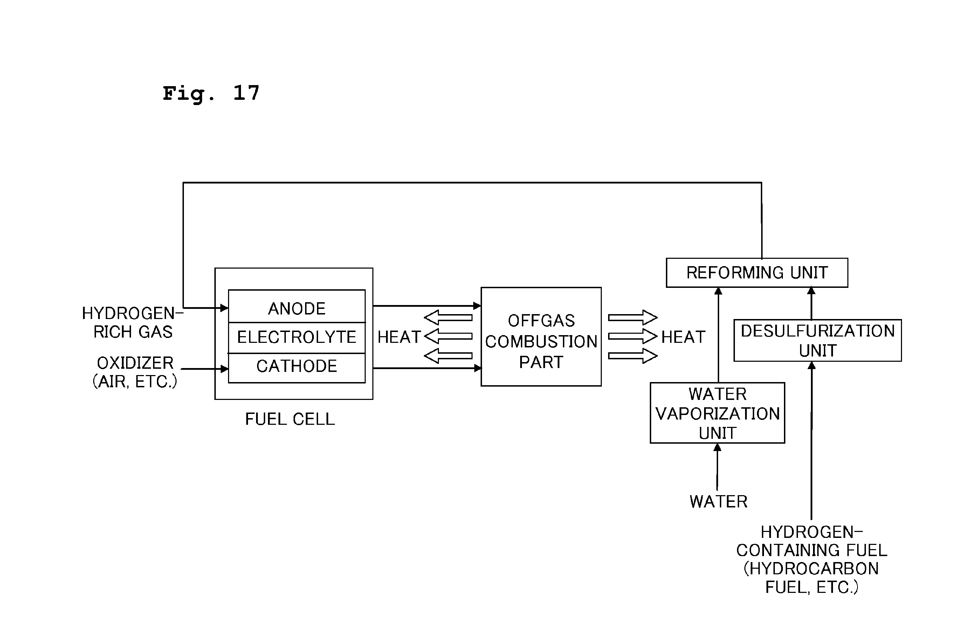

Fig. 17 conceptually depicts the SOFC system. In Fig. 17, for example, the hydrocarbon fuel is used as the hydrogen-containing fuel. As the hydrocarbon fuel, there is used compound which contains carbon and hydrogen in the molecule (which may contain other elements such as oxygen) or any mixture of two or more such compounds. The hydrocarbon fuel is exemplified by, for example, hydrocarbons, alcohols, ethers, and biofuels. As the hydrocarbon fuel, it is possible to appropriately use a fuel made from fossil fuel, such as petroleum and coal; a fuel made from synthetic fuel, such as synthesis gas; and a fuel made from biomass, those of which are conventionally used. Specifically, examples of the hydrocarbons include methane, ethane, propane, butane, natural gas, liquefied petroleum gas (LPG), city gas, town gas, gasoline, naphtha, kerosene, and gas oil. Examples of the alcohols include methanol and ethanol. Examples of the ethers include dimethyl ether. Examples of the biofuels include biogas, bioethanol, biodiesel, and bio-jet. The hydrogen-containing fuel supplied to the SOFC system passes through a desulfurization unit to arrive at a reforming unit. The hydrogen-containing fuel which has arrived at the reforming unit reacts with water vapor supplied from a water vaporization unit according to the following reaction formula to generate the hydrogen-rich gas.

CmHn + mH₂O → mCO + ((n/2) + m) H₂

The reaction represented by the above formula is endothermic reaction, and thus the reaction efficiency is improved at high temperature. The hydrogen-rich gas generated at the reforming unit is supplied to the fuel electrode (anode) of the fuel cell. Meanwhile, the oxidizer such as air is supplied to the oxidant electrode (cathode) of the fuel cell. The solid oxide, as the electrolyte, such as stabilized zirconia is disposed between the fuel electrode and the oxidant electrode. The oxygen (O₂) supplied to the oxidant electrode receives electron at the oxidant electrode to become oxide ion (O²⁻), and then the oxide ion passes through the electrolyte to move to the fuel electrode (anode). The oxide ion (O²⁻) which has arrived at the fuel electrode combines with hydrogen (H₂) to generate water (H₂O) and further the oxide ion (O²⁻) emits or ejects the electron. Accordingly, the fuel cell generates electricity through the electrochemical reaction by use of the supplied hydrogen-rich gas and oxidizer.

The reaction at the reformer is the endothermic reaction, and thus it is desired that the reaction be performed under high-temperature environment. Further, in view of power generation efficiency and the like, it is also desired that the electrochemical reaction in the fuel cell be performed under high-temperature environment. Therefore, as depicted in Fig. 17, it is known the structure in which offgas (exhaust gas) which was not used for the electrochemical reaction in the fuel cell is allowed to burn at an offgas combustion part above the fuel cell, and the heat generated by this combustion is given to the reforming unit and the fuel cell (patent literatures 1 and 4). The temperature in the fuel cell module having the above structure rises to a temperature higher than 700 degrees Celsius during the operation.

Thus, in the fuel cell module which provides the heat to the reformer according to the above structure, the hydrogen-rich gas can be supplied efficiently by making the reformer have high temperature. However, there is a problem that the thermal expansion of the reformer occurs. For example, the fuel cell module holding the reformer at both ends as described in patent literatures 1 and 2 has the following problem. That is, in a case that the thermal expansion of the reformer occurs, deformation of the reformer in an up-down direction such as warpage occurs due to thermal stress to cause some trouble in the supply of the hydrogen-rich gas by the reformer. Further, patent literature 3 discloses that the thermal expansion of the reformer under high temperature causes the deformation and/or damage in other components in the fuel cell module, and thereby decreasing the durability of the fuel cell module.

Patent literature 4 discloses a fuel cell stack device (fuel battery cell stack device) in which the reformer is fixed to a manifold by a fuel gas supply pipe. In the fuel cell stack device, the reformer includes a deformation limiting member extending toward the manifold. Patent literature 4 discloses that the deformation limiting member can prevent the deformation of the reformer in the up-down direction and the damage of a joint material which joins the fuel cell to the manifold in the fuel cell module, even when the thermal expansion of the reformer occurs.
PATENT LITERATURE 1: Japanese Patent Application Laid-open No. 2010-040314
PATENT LITERATURE 2: Japanese Patent Application Laid-open No. 2006-269332
PATENT LITERATURE 3: Japanese Patent Application Laid-open No. 2010-277746
PATENT LITERATURE 4: Japanese Patent Application Laid-open No. 2009-087540

### Summary of Invention

### problem to be solved

However, according to the technology disclosed in patent literature 4, in the case of the thermal expansion of the reformer, the deformation limiting member does not slide on the manifold smoothly, the deformation limiting member itself bends, and results in the deformation of the reformer in the up-down direction. Further, patent literature 4 discloses an embodiment in which two deformation limiting members are provided to achieve more stable support for the reformer. In this embodiment, it is necessary to make the two deformation limiting members always have the same length. In a case that the lengths of the two deformation limiting members change to have different lengths from each other, the force in a direction in which the reformer is twisted would be generated and thus the deformation limiting members could cause the deformation of the reformer.

In view of the above, an object of the present invention is to provide a reformer support structure which is capable of stably supporting a reformer, which expands or contracts depending on temperature change, without the deformation of the reformer in a direction other than the expanding or contracting direction, and a fuel cell module including such reformer support structure.

### Solution to the Problem

According to a first aspect of the present invention, there is provided a reformer support structure for a fuel cell module, the fuel cell module including a fuel cell body which includes a cell stack and a reformer disposed above the cell stack, and a housing which contains the fuel cell body, the reformer support structure including, a first member which includes a first engagement portion and is attached to the housing; and a second member which includes a second engagement portion and is attached to the reformer. The reformer is supported by the housing by engaging the second engagement portion with the first engagement portion. An engagement part where the second engagement portion is engaged with the first engagement portion is provided above a bottom of the reformer. The second engagement portion is slidable on the first engagement portion in a direction of thermal expansion of the reformer.

In the reformer support structure of the present invention, since the second engagement portion is engaged with the first engagement portion, the reformer is supported by the housing and the second engagement portion is slidable on the first engagement portion in the direction of the thermal expansion of the reformer. Therefore, the reformer support structure is capable of supporting the reformer without applying stress to the reformer even when the thermal expansion of the reformer occurs. Further, since the engagement part where the second engagement portion is engaged with the first engagement portion is provided above the bottom of the reformer, the reformer support structure is less likely to be affected by heat, which is generated above the fuel cell stack, specifically, in a combustion area.

In the reformer support structure of the present invention, a raw material supply pipe may be attached to one end of the reformer, and the engagement part where the second engagement portion is engaged with the first engagement portion may be provided at a position which is closer to the other end of the reformer than to the one end in the direction of the thermal expansion of the reformer. This structure allows the reformer to be supported from both sides in a balanced manner. The engagement part where the second engagement portion is engaged with the first engagement portion is formed by a surface contact, a line contact, or a point contact between the first engagement portion and the second engagement portion.

In the reformer support structure of the present invention, in a case that the combustion area is defined between the reformer and the cell stack, the influence by the heat from the combustion area can be reduced by disposing the first member at a position outside the combustion area as the fuel cell module is viewed from above. Further, the influence by the heat from the combustion area can be reduced by disposing the second member at a position outside the combustion area.

In the reformer support structure of the present invention, the raw material supply pipe may be attached to one end of the reformer, and the first member may be attached to the housing in a vicinity of the other end of the reformer. Further, the second member may be attached to the other end of the reformer or a vicinity thereof. This attachment structure allows the reformer to be supported from both sides in a balanced manner.

In the reformer support structure of the present invention, the first member may be attached to an upper inner surface of the housing. Since the reformer is disposed in the vicinity of the upper inner surface of the housing, the stress, which is applied to the reformer support structure including the first member at the time of the thermal expansion of the reformer, can be minimized, and further it is possible to reduce the influence of the heat generated below the reformer on the reformer support structure. In a case that the reformer has an elongated box-shaped form, a longitudinal direction of the reformer is the direction of the thermal expansion of the reformer.

In the reformer support structure of the present invention, the influence of the heat generated below the reformer can be reduced by disposing the second member on an upper surface of the reformer.

In the reformer support structure of the present invention, at least a part of the first member may have a substantially L-shaped form or a substantially U-shaped form. Further, at least a part of the second member may have a substantially L-shaped form or a substantially U-shaped form.

According to a second aspect of the present invention, there is provided a fuel cell module including the reformer support structure of the first aspect.

### Advantageous Effects of Invention

The reformer support structure of the present invention is capable of supporting the reformer without applying stress through the reformer support structure to the reformer even when the reformer expands or contracts depending on temperature change.

### Brief Description of Drawings

Fig. 1 is a perspective view of a fuel cell module according to an embodiment of the present invention.
Fig. 2 is a schematic cross-sectional view of the fuel cell module taken along the line A-A of Fig. 1.
Fig. 3 is a perspective view of a reformer and a reformer support structure according to a first embodiment of the present invention.
Fig. 4 is a perspective view of a structure of a first member of the reformer support structure.
Fig. 5 is a perspective view of a structure of a second member of the reformer support structure.
Fig. 6 is an illustrative view which illustrates how the reformer support structure supports the reformer.
Fig. 7 conceptually depicts the flow of gas in the fuel cell module.
Fig. 8 is a perspective view of the reformer and another reformer support structure according to the first embodiment of the present invention.
Fig. 9 is a perspective view depicting a modification of the second member of the reformer support structure.
Fig. 10 is a perspective view depicting another modification of the second member of the reformer support structure.
Fig. 11 is a perspective view of the reformer and still another reformer support structure according to the first embodiment of the present invention.
Fig. 12 is a perspective view of the reformer and yet another reformer support structure according to the first embodiment of the present invention.
Fig. 13 is a perspective view of the reformer and further reformer support structure according to the first embodiment of the present invention.
Fig. 14 is a perspective view of a reformer and a reformer support structure according to a second embodiment of the present invention.
Fig. 15 is a perspective view of the reformer and another reformer support structure according to the second embodiment of the present invention.
Fig. 16 is a perspective view of a reformer and a reformer support structure according to a third embodiment of the present invention.
Fig. 17 is a block diagram depicting the outline of a fuel cell system.

### Description of Embodiments

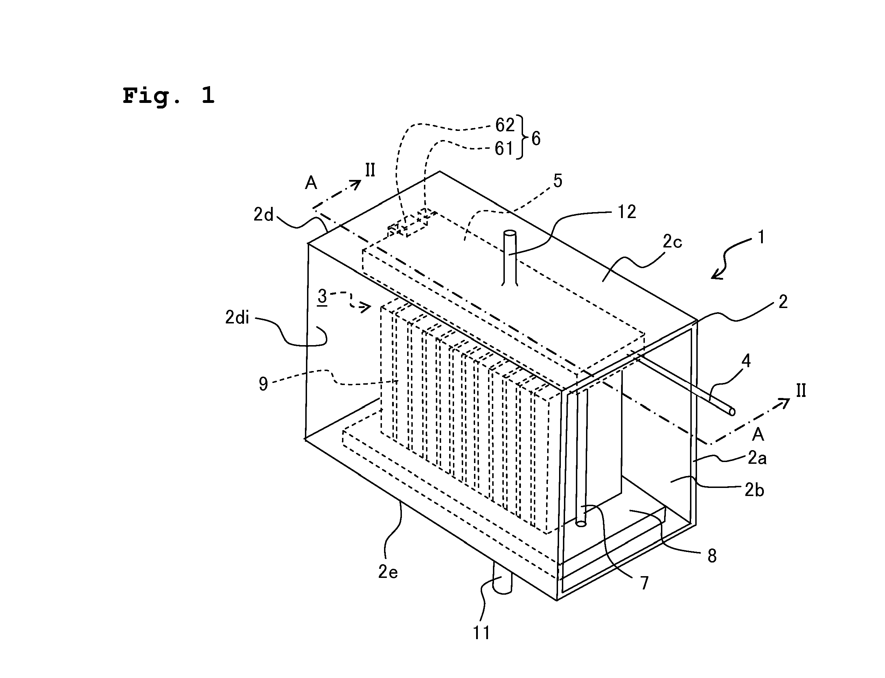

A first embodiment of a reformer support structure of the present invention will be explained with reference to Fig. 1 to Fig. 13.

### [First embodiment]

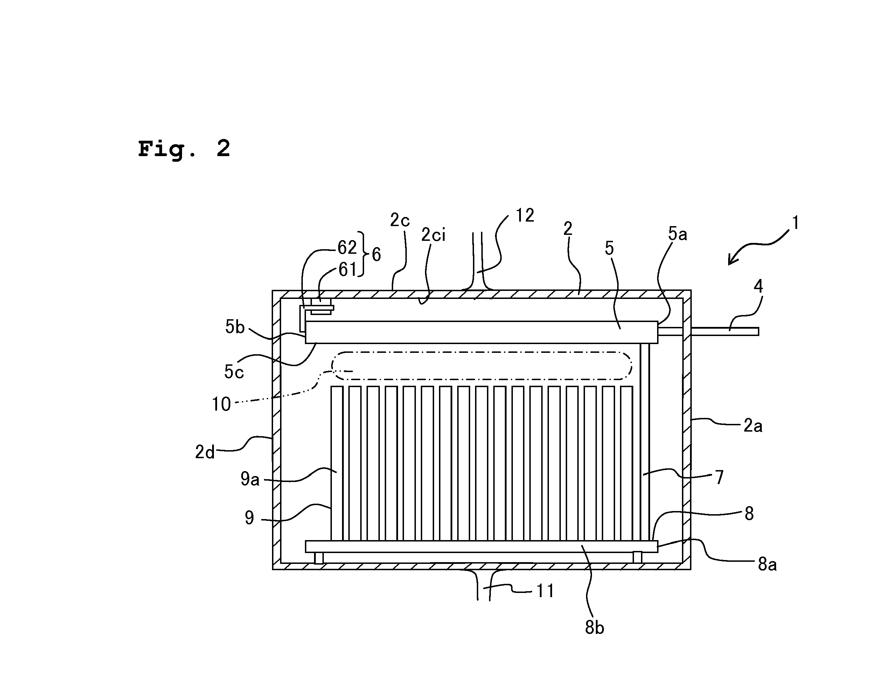

Fig. 1 depicts the overall structure of a fuel cell module 1 having a reformer support structure of this embodiment. The fuel cell module 1 is formed of a module body 3 and a module can body (housing) 2 which contains the module body 3. The module body 3 mainly includes a raw material supply pipe 4, a reformer 5 which generates hydrogen-rich gas from raw material gas supplied from the raw material supply pipe 4, a reformed gas supply pipe 7 which feeds the rich gas generated by the reformer 5, a base 8 to which the rich gas is supplied through the reformed gas supply pipe 7, and a fuel cell stack (fuel battery cell stack) 9 which causes electrochemical reaction between an oxidizer and the rich gas supplied from the base 8. The module can body 2 is a rectangular-parallelepiped shaped housing. In this specific example, an opening 2b is formed in a right side wall 2a of the module can body 2 to insert the module body 3 in the module can body 2. After the module body 3 is inserted into the module can body 2, the opening 2b is closed with a lid (2a) to keep airtightness in the module can body 2. In this situation, the raw material supply pipe 4 is connected to the reformer 5 in a state of penetrating the lid 2a of the module can body 2. An exhaust gas port 12 is provided in an upper plate 2c of the module can body 2, and an oxidizer supply portion 11 is provided in a lower surface 2e. Although members having pipe-shaped cross-sections are respectively depicted as the raw material supply pipe 4, the oxidizer supply portion 11, and the exhaust gas port 12 in Fig. 1 and Fig. 2, the shapes of the raw material supply pipe 4, the oxidizer supply portion 11, and the exhaust gas port 12 are not limited to these. For example, portions (flow channels) through which the raw material and the oxidizer are respectively introduced into the module can body 2 and a portion (flow channel) through which the exhaust gas is emitted or ejected from the module can body 2 may have any structure and any shape. For example, the cross-sectional shape of each of the flow channels may be any shape such as a slit shape, a rectangular shape, and a hole shape. Further, a flow channel for the oxidizer or the exhaust gas may be formed in at least a part of the outer circumference of the module can body 2.

Fig. 2 is a schematic cross-sectional view of the fuel cell module 1 taken along the line A-A of Fig. 1. For the purpose of explanation, in the following description, the front side, the rear side, the upper side, the lower side, the right side, and the left side of Fig. 2 are respectively referred to as the front side, the rear side, the upper side, the lower side, the right side (or raw material supply side), and the left side of the module can body 2, the reformer 5, the base 8, and the fuel cell stack 9.

The reformer 5 is an elongated box-shaped member which extends in a left-right direction at the upper part inside the module can body 2. The raw material supply pipe 4 is connected to a right side end 5a in a longitudinal direction of the reformer 5 (hereinafter also simply referred to as "longitudinal direction"). A left side end 5b in the longitudinal direction of the reformer 5 is supported by a reformer support structure 6 which will be described later in a state of being hung from an inner surface 2ci of the upper plate 2c of the module can body 2. One end of the reformed gas supply pipe 7 is connected to a bottom surface 5c of the reformer 5 in the vicinity of the right side end 5a. That is, the reformer 5 is supported by the raw material supply pipe 4 and the reformed gas supply pipe 7 on the raw material supply side in the longitudinal direction, and is supported only by the reformer support structure 6 on a side opposite to the raw material supply side. The reformer 5 reforms hydrogen-containing fuel and water vapor introduced from the raw material supply pipe 4 to generate the hydrogen-rich gas, and then emits the reformed gas (hydrogen-rich gas) through the reformed gas supply pipe 7. The reformed gas supply pipe 7 extends along a side portion of the fuel cell stack 9, and the other end on a side opposite to the one end connected to the reformer 5 is connected to the base 8.

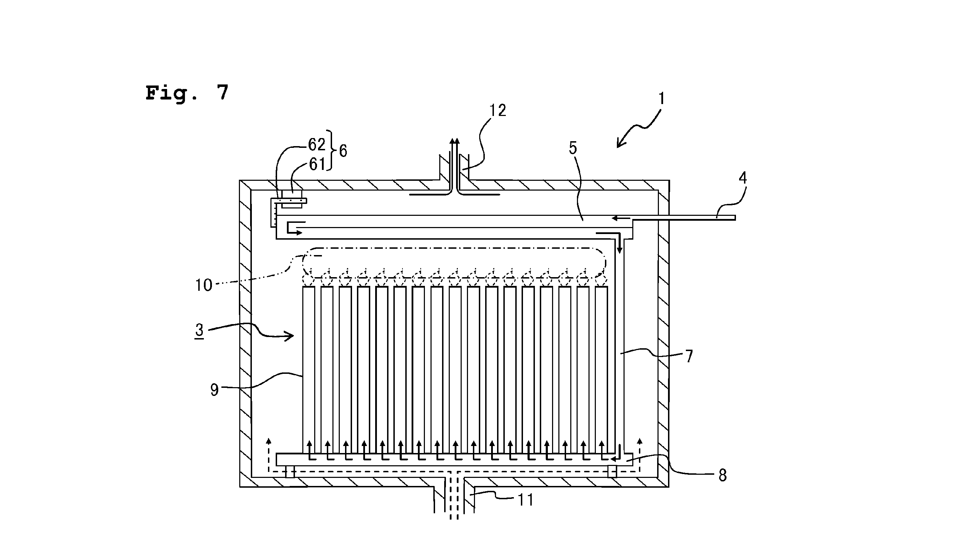

As depicted in Fig. 2, the base 8 is disposed on the bottom surface of the module can body 2. The fuel cell stack 9 is placed on the upper surface of the base 8. The other end of the reformed gas supply pipe 7 is connected to a portion, of the upper surface of the base 8, in the vicinity of the right side end 8a, where the fuel cell stack 9 is not placed. In the base 8, there is formed a manifold (branched channel) 8b for supplying the hydrogen-rich gas supplied through the reformed gas supply pipe 7 to each cell of the fuel cell stack 9 (see Fig. 7).

The fuel cell stack 9 includes a plurality of fuel cells (a plurality of fuel battery cells) 9a arranged in an array in the left-right direction. The fuel cells 9a each have a fuel electrode, solid electrolyte, and an oxidizer electrode (not shown). The electrochemical reaction is caused by using the hydrogen-rich gas supplied to each fuel cell 9a through the manifold 8b in the base 8 and the oxidizer supplied from the oxidizer supply portion 11. As depicted in Fig. 2, a space (gap) 10 is formed above the fuel cell stack 9 (between the fuel cell stack 9 and the reformer 5). This space functions as a combustion area 10. In the combustion area 10, the hydrogen-rich gas and the oxidizer which were not used in the fuel cell stack 9 are allowed to burn. The distance between the fuel cell stack 9 and the reformer 5 is, for example, approximately 15 mm.

Each of the raw material supply pipe 4 and the oxidizer supply portion 11 is fixed to a surface of the module can body 2 in a state that a gap is sealed with sealing material and the like to keep the airtightness in the module can body 2. Alternatively, these pipes can be integrally formed with the module can body 2.

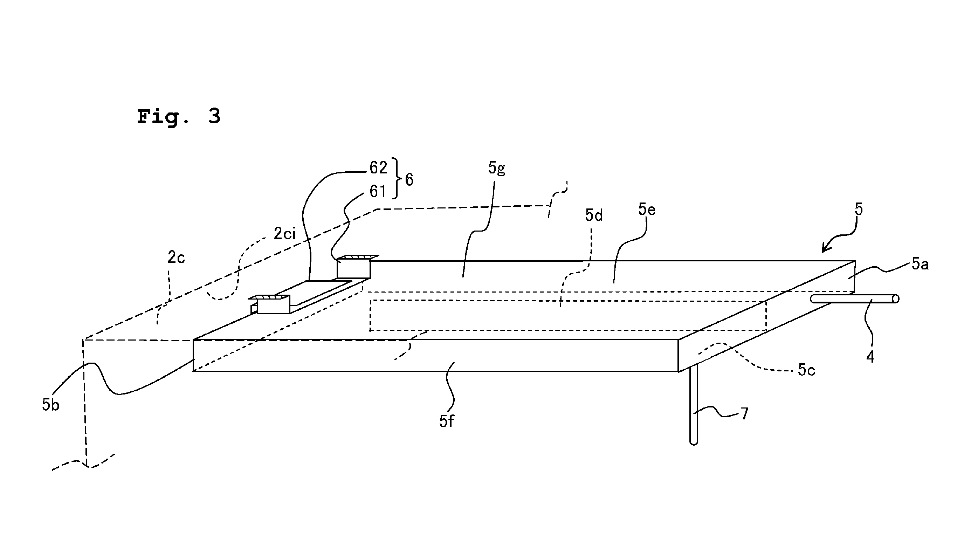

Subsequently, an explanation will be made about the internal structure of the reformer 5 and the support structure for supporting the reformer 5 in detail with reference to Fig. 3. As depicted in Fig. 3, a separation wall 5d is formed in the reformer 5 at the substantially center position in a short direction of the reformer 5 (direction perpendicular to the longitudinal direction of the reformer 5 in a front-rear direction). The separation wall 5d extends in the longitudinal direction in a state of being brought into contact with the right side end 5a, the bottom surface 5c, and an upper surface 5g, with the separation wall 5d being not brought into contact with the bottom surface 5c and the upper surface 5g in the vicinity of the left side end 5b. The interior of the reformer 5 is divided into two areas by the separation wall 5d, the two areas being a first space 5e on the side where the raw material supply pipe 4 is connected and a second space 5f on the side where the reformed gas supply pipe 7 is connected. Accordingly, the hydrogen-containing fuel and water vapor supplied from the raw material supply pipe 4 to the right side end 5a of the reformer 5 pass through the first space 5e and make a turn in the vicinity of the left side end 5b, pass through the second space 5f and are emitted from the reformed gas supply pipe 7.

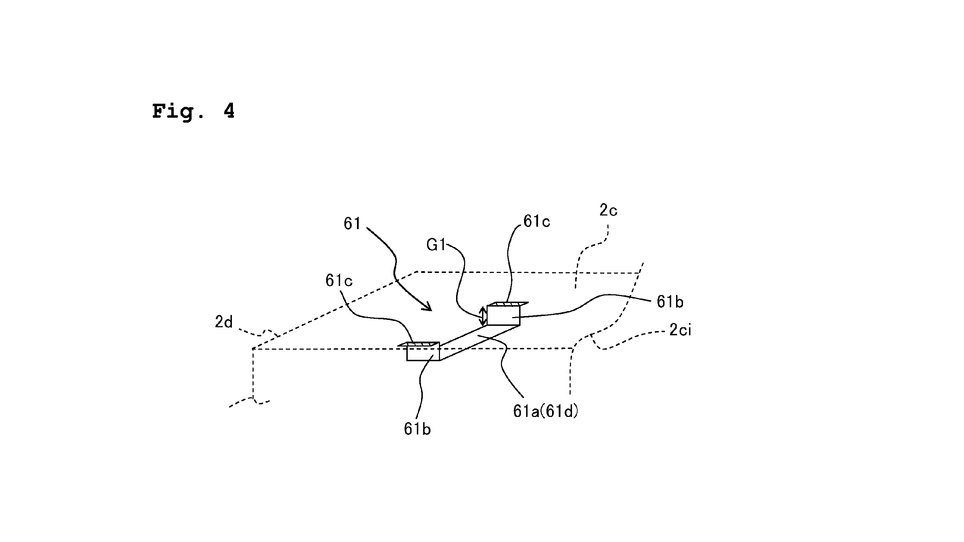

The reformer support structure 6 is formed of a first member 61 attached to the inner surface 2ci of the upper plate 2c of the module can body 2 and a second member 62 attached to the reformer 5. Fig. 4 depicts the shape of the first member 61 of the reformer support structure 6. The first member 61 is a bending plate having a substantially U-shaped cross-section. The first member 61 includes a flat plate portion 61a extending in the short direction of the reformer 5, a pair of suspending portions 61b, 61b which is bent upward from both ends of the flat plate portion 61a and extends as it is, and a pair of protruding portions 61 c, 61c which is bent from the ends of the suspending portions 61b, 61b and extends substantially parallel to the upper plate 2c of the module can body 2. The upper surfaces of the protruding portions 61 c, 61c are attached to the inner surface 2ci of the upper plate 2c by welding and the like. In a case that the suspending portions 61b, 61b can be weld directly to the inner surface 2ci of the upper plate 2c, the protruding portions 61 c, 61c can be omitted. A predetermined gap G1 is formed between the flat plate portion 61a and the inner surface 2ci of the upper plate 2c of the module can body 2. In a case that a material which is less likely to cause heat sag is used, one suspending portion 61b of the pair of suspending portions 61b, 61b can be omitted, and one protruding portion 61c of the pair of protruding portions 61c, 61c can be omitted. An upper surface 61d of the flat plate portion 61 a is a first engagement portion (61d) to be engaged with the second member 62. The first member 61 can be formed, for example, by bending a flat plate such as stainless plate. It is desired that the position, in the inner surface 2ci of the upper surface of the module can body 2, where the first member 61 is attached be made as close as possible to a left wall surface 2d of the module can body 2. It is possible to reduce the influence of heat generated from the fuel cell stack 9 and the combustion area 10 on the reformer support structure 6 by attaching the first member 61 at a position outside the fuel cell stack 9 and the combustion area 10 especially in the longitudinal direction, as depicted in Fig. 2. Noted that the deformation of the module can body 2 could be caused due to the influence of the heat during the operation of the fuel cell module 1. However, it is also possible to reduce the influence of the deformation of the module can body 2 by attaching the first member 61 as close as possible to the left wall surface 2d of the module can body 2. Accordingly, the reformer 5 can be supported more stably.

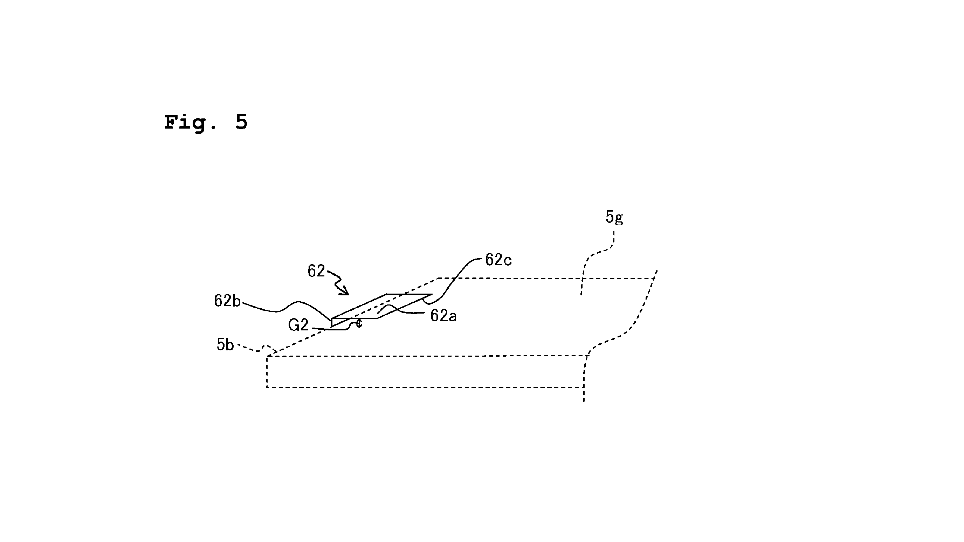

Fig. 5 depicts the shape of the second member 62 of the reformer support structure 6. The second member 62 is a bending member having a substantially L-shaped cross-section. The second member 62 is formed of a flat plate portion 62a which extends substantially parallel to the upper surface 5g of the reformer 5 and a flat vertical portion 62b which is bent from the end of the flat plate portion 62a in a direction perpendicular thereto (vertical direction) and extends as it is. The second member 62 is attached to the reformer 5 such that a part of the vertical portion 62b (the vicinity of lower end) is attached to a left side surface 5b by welding and the like to form a predetermined gap G2 between the flat plate portion 62a and the upper surface 5g of the reformer 5. A lower surface 62c of the flat plate portion 62a is a second engagement portion (62c) to be engaged with the first engagement portion 61d of the first member 61. As depicted in Fig. 5, it is desired that the second member 62 be positioned at the center in the short direction of the reformer 5. Accordingly, the reformer 5 can be stably supported by the reformer support structure 6 in a balanced manner.

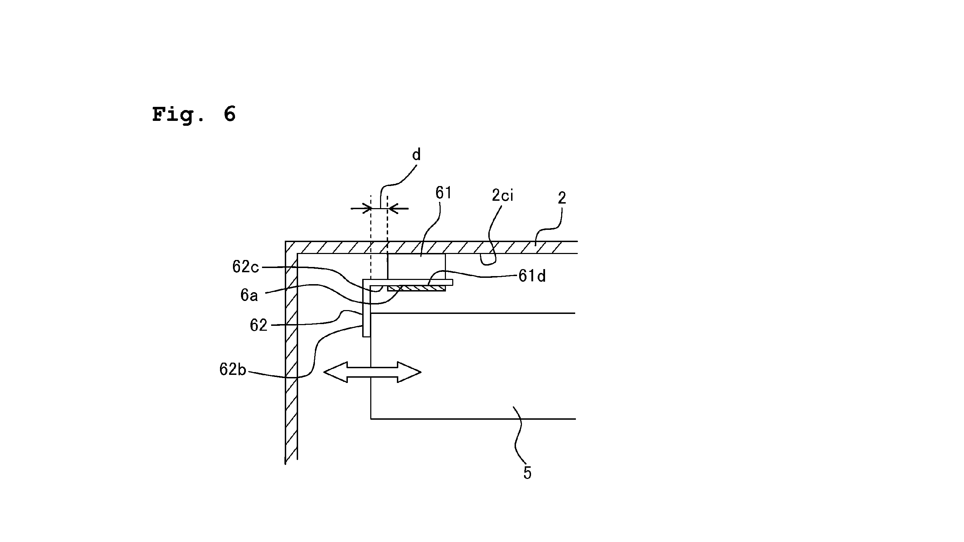

Fig. 6 is a cross-sectional view which depicts how the reformer 5 is supported by the first member 61 attached to the module can body 2 and the second member 62 attached to the reformer 5. The flat first engagement portion 61 d overlaps with the flat second engagement portion 62c in a state of being brought into a surface contact therewith, which allows the first member 61 to be engaged with the second member 62. With this, the reformer 5 is supported by the module can body 2. Apart where the first engagement portion 61d overlaps with the second engagement portion 61c in the state of being brought into the surface contact therewith is an engagement part 6a. As will be described later on, the reformer 5 has high temperature during the operation of the fuel cell module 1, which causes the thermal expansion of a few millimeters in the direction indicated by the arrow pointing to the left in Fig. 6. Even when the reformer 5 is moved due to the thermal expansion, since the second engage portion 62c slides on the first engagement portion 61d, the state in which the second member 62 is engaged with the first member 61 is maintained and the engagement part 6a is not moved. Thus, the reformer 5 is supported by the inner surface 2ci of the upper plate 2c of the module can body 2 without receiving the stress from the second member 62. It is desired that the engagement part 6a be provided on the upper side of the bottom portion of the reformer 5. Further, it is desired that the engagement part 6a be provided, in the longitudinal direction of the reformer 5 (in the thermal expansion direction), at a side of the left side end 5b of the center portion in the longitudinal direction (it is desired that the engagement part 6a be provided at a position closer to the left side end 5b rather than the right side end 5a to which the raw material supply pipe 4 is connected). In this embodiment, although the bottom surface 5c of the reformer 5 is the bottom portion of the reformer 5, the shape of the reformer is not limited to the shape of this embodiment, as will be described later on. The portion, of the reformer having any shape, which is provided at the lowest position in the module can body 2, is referred to as the bottom portion of the reformer.

As described above, the area (engagement part 6a) where the first engagement portion 61 d is engaged on the second engagement portion 62c is changed depending on the temperature change of the reformer 5. In view of this, it is desired that the length of the second engagement portion 62c in the longitudinal direction be longer than the length of the first engagement portion 61 d in the longitudinal direction. That is, it is desired that the length of the second engagement portion 62c in the longitudinal direction be a length to an extent not releasing the engagement between the first engagement portion 61d and the second engagement portion 62c even at the time of the thermal expansion of the reformer 5. Meanwhile, in a case that the fuel cell module 1 is not operated, the temperature of the reformer 5 is decreased and the reformer 5 contracts in the direction indicated by the arrow pointing to the right in Fig. 6. It is desired that the left side end of the first member 61 in the longitudinal direction be disposed at a position separated from the vertical portion 62b of the second member 62 by a predetermined distance d in the longitudinal direction in order not to cause the interference between the first member 61 and the second member 62 even in the case of the contraction of the reformer 5. Here, it is assumed that the first engagement portion 61d has, for example, the size in the longitudinal direction (left-right direction of the drawing) of 10 mm and the size in the short direction perpendicular to the longitudinal direction (front-rear direction of the drawing) of 30 mm. In this case, from the above viewpoint, it is preferred that the length of the second engagement portion 62c in the longitudinal direction be longer than the length of the engagement part 6a in the longitudinal direction. For example, the length of the second engagement portion 62c in the longitudinal direction can be 15 mm to 30 mm. In the above description, the first engagement portion 61d of the first member 61 and the second engagement portion 62c of the second member 62 each have a rectangular shape. However, the shapes of the first engagement portion 61d and the second engagement portion 62c are not limited to the rectangular shapes, and may be any shape such as a square, a substantially circular shape, and a substantially elliptical shape.

Subsequently, an explanation will be made about the operation of the reformer support structure of this embodiment.

Fig. 7 depicts the flows of the hydrogen-containing fuel, water vapor, the hydrogen-rich gas, the oxidizer, and the exhaust gas when the fuel cell module 1 generates the electricity. When the fuel cell module 1 generates the electricity, the hydrogen-containing fuel such as city gas, kerosene, and LPG and water vapor are provided from the raw material supply pipe 4 to the reformer 5.

The hydrogen-containing fuel and water vapor supplied to the reformer 5 are reformed in the reformer 5. That is, the hydrogen-containing fuel and water vapor cause a reaction by a catalyst provided in the reformer 5, the heat effect provided by the combustion in the combustion area 10, etc., to generate the hydrogen-rich gas. It is preferred that the temperature be uniform throughout the reformer 5 in order to cause the reaction efficiently. Thus, it is desired that the reformer 5 be able to uniformly take the heat from the combustion area 10 formed on the upper side of the fuel cell stack 9 by maintaining the reformer 5 horizontally and making the distance at any position between the reformer 5 and the fuel cell stack 9 substantially constant. In this situation, the distance between the reformer 5 and the fuel cell stack 9 may be, for example, approximately 15 mm.

The hydrogen-rich gas generated in the reformer 5 passes through the reformed gas supply pipe 7 and the base 8, and then is supplied to the fuel electrode of the fuel cell stack 9. Meanwhile, the oxidizer such as oxygen is supplied to the oxidizer electrode of the fuel cell stack 9 through the oxidizer supply portion 11 formed in the bottom surface of the module can body 2. The electrochemical reaction between the supplied hydrogen-rich gas and oxidizer is caused in the fuel cell stack 9, and the electricity generated by the electrochemical reaction is extracted to the outside of the module can body 2 via a current extracting portion (not depicted).

Not all of the supplied hydrogen-rich gas and oxidizer are used during the electrochemical reaction in the fuel cell stack 9. The hydrogen-rich gas and the oxidizer which were not used for the reaction are supplied to the combustion area 10 formed on the upper side of the fuel cell stack 9, and then are allowed to burn in the combustion area 10. The heat generated by the combustion is given to the reformer 5 and the fuel cell stack 9. Further, the exhaust gas generated by the combustion passes through a flow channel between the reformer 5 and the upper plate 2c of the module can body 2, and then is emitted or ejected to the outside of the module can body 2 through the exhaust gas port 12 provided in the upper plate 2c.

Because of the above operation, the interior of the module can body 2 has a high temperature of 700 degrees Celsius or more during the operation of the fuel cell module 1. In this situation, the reformer 5 also has high temperature, and the bottom surface 5c of the reformer 5 which is exposed to the heat from the combustion area 10 has an approximately 800 degrees Celsius. As a result, the thermal expansion of the reformer 5 occurs especially in the longitudinal direction with an increase in temperature, when the operation of the fuel cell module 1 is started.

Here, the reformer 5 is connected to the raw material supply pipe 4 at the right side end 5a in the longitudinal direction as described above, and the raw material supply pipe 4 is fixed to the lid 2a of the module can body 2. Thus, in a case that the thermal expansion of the reformer 5 occurs at the time of operating the fuel cell module 1, the influence of the thermal expansion is conspicuous at the left side end 5b of the reformer 5 in the longitudinal direction.

The reformer support structure 6 supports the reformer 5 at a position where the influence of the thermal expansion on the reformer 5 is conspicuous. The second member 62 of the reformer support structure 6 is attached to the reformer 5, and thus the second member 62 moves integrally with the reformer 5 due to the thermal expansion of the reformer 5. In this situation, as depicted in Fig. 6, the second engagement portion 62c of the second member 62 slides on the first engagement portion 61d of the first member 61 attached to the inner surface 2ci of the upper surface 2c of the module can body 2. The first engagement portion 61 d and the second engagement portion 62c each have a size which can maintain the sufficient contact to support the reformer 5 even in the case of the thermal expansion of the reformer 5. Therefore, when the thermal expansion of the reformer 5 occurs, the second member 62 only moves in a horizontal direction on the same plane. That is, the position of the engagement part 6a in the longitudinal direction does not change, the engagement part 6a being formed by overlapping the first engagement portion 61d with the second engagement portion 62c in the state of being brought into the surface contact therewith. Therefore, the reformer support structure 6 can support the reformer 5 without applying the stress to the reformer 5 even when the thermal expansion of the reformer 5 occurs. Further, the expansion (deformation) of the reformer 5 due to the thermal expansion is not inhibited, and thus the occurrence of thermal stress is also prevented. Accordingly, the deformation such that the center portion of the reformer 5 is curved upward is less likely to occur. Further, as is clear from Fig. 7, both the first member 61 and the second member 62 of the reformer support structure 6 are positioned outside the cell stack 9 and the combustion area 10 in the left-right direction (the first member 61 and the second member 62 are positioned outside the combustion area 10 as the fuel cell module 1 is viewed from above). Therefore, the reformer support structure 6 is less likely to be affected by heat from the combustion area 10.

In a case that the operation of the fuel cell module 1 is stopped, the temperature of the reformer 5 is decreased to cause the contraction of the reformer 5. In this situation, since the second member 62 of the reformer support structure 6 is attached to the reformer 5, the second member 62 moves integrally with the reformer 5 due to the contraction of the reformer 5. Here, the second engagement portion 62c of the second member 62 slides on the first engagement portion 61 d of the first member 61 attached to the upper surface of the module can body 2, as depicted in Fig. 6. The first engagement portion 61d is brought into contact with the second engagement portion 62c in a state of being slightly deviated therefrom (with spacing distance d) so that the interference between the first member 61 and the second member 62 is not caused even in the case of the contraction of the reformer 5. Thus, even if the reformer 5 contracts, the second member 62 merely moves on the same plane in the horizontal direction. Therefore, the reformer support structure 6 is capable of supporting the reformer 5 stably even when the contraction of the reformer 5 occurs. Further, since the deformation of the reformer 5 due to the contraction is not inhibited, the occurrence of the thermal stress is also prevented.

As described above, the reformer support structure 6 of this embodiment is capable of supporting the reformer 5 horizontally in a stable manner even when the thermal expansion or contraction of the reformer 5 occurs by sliding the second engagement portion 62c of the second member 62 on the first engagement portion 61d of the first member 61. Further, the reformer support structure 6 of this embodiment is formed only of the first member 61 and the second member 62, and thus the reformer support structure 6 can be attached to the module body 3 easily at the time of manufacture of the fuel cell module 1 and the production cost of the reformer support structure is low. The reformer support structure 6 and the engagement part 6a are provided above the reformer 5 (side opposite to the combustion area 10) inside the area which is formed by projecting the reformer 5 upward, the engagement part 6a being formed by engaging the first engagement portion 61d of the first member 61 with the second engagement portion 62c of the second engagement portion 62 in the state of being brought into the surface-to-surface contact therewith. Thus, the reformer support structure 6 and the engagement part 6a are less likely to be affected by combustion heat. Further, the reformer support structure 6 supports the reformer 5 by the upper plate 2c, of parts or components of the module can body 2, which is closest to the reformer 5, and thus the stress is less likely to be applied on the first member 61 and the second member 62 constructing the reformer support structure 6 even when the reformer 5 moves owing to the thermal expansion. If the engagement part 6a is positioned at the base 8 or in the vicinity thereof, the first member 61 or the second member 62 becomes long. Thus, when the thermal expansion of the reformer 5 occurs, the first member 61 or the second member 62 is bent to make the second member 62 have difficulty in moving smoothly relative to the first member 61.

Subsequently, an explanation will be made about modifications of the reformer support structure 6 of this embodiment.

### [1-1 modification]

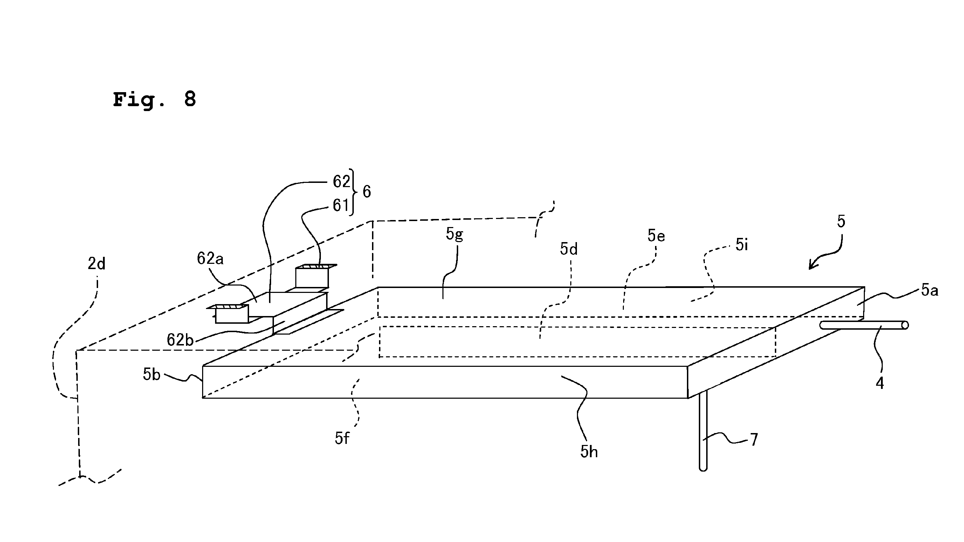

In the reformer support structure 6 of the above embodiment, the flat plate portion 62a of the second member 62 is bent inward of the reformer 5 from the vertical portion 62b. However, like the modification depicted in Fig. 8, the flat plate portion 62a of the second member 62 may be bent outward of the reformer 5 from the vertical portion 62b. Such an arrangement enables the attachment position of the first member 61 to the inner surface 2ci of the upper surface 2c of the module can body 2 to be further closer to the left side wall 2d of the module can body 2. Therefore, even when the module can body 2 is deformed due to the effect of heat during the operation of the fuel cell module 1, it is possible to further reduce the effect of the deformation on the reformer support structure 6.

### [1-2 modification]

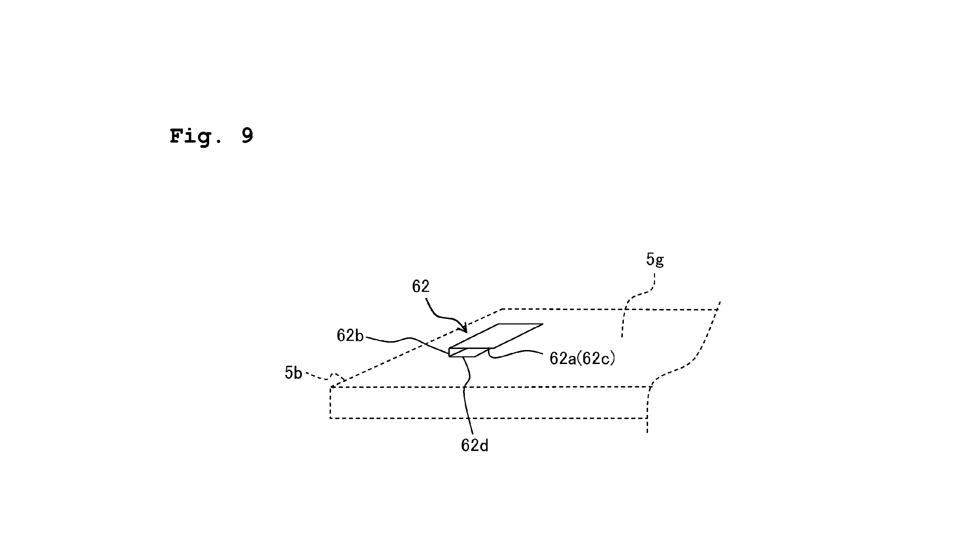

In the reformer support structure 6 of the above embodiment, a part of (lower end) of the vertical portion 62b of the second member 62 is attached to the left side end 5b of the reformer 5. However, as depicted in Fig. 9, a flat plate attaching portion 62d may be defined by bending the vertical portion 62b to be parallel to the flat plate portion 62a, and then the flat plate attaching portion 62d may be attached to the upper surface 5g of the reformer 5. In this situation, the attachment position of the first member 61 to be engaged with the second member 62 to the inner surface 2ci of the module can body 2 is adjusted based on the position of the second member 62. Accordingly, the entire reformer support structure 6 is positioned above the reformer 5, and thus it is possible to reduce the influence of the heat caused in the combustion area 10 on the reformer support structure 6.

### [1-3 modification]

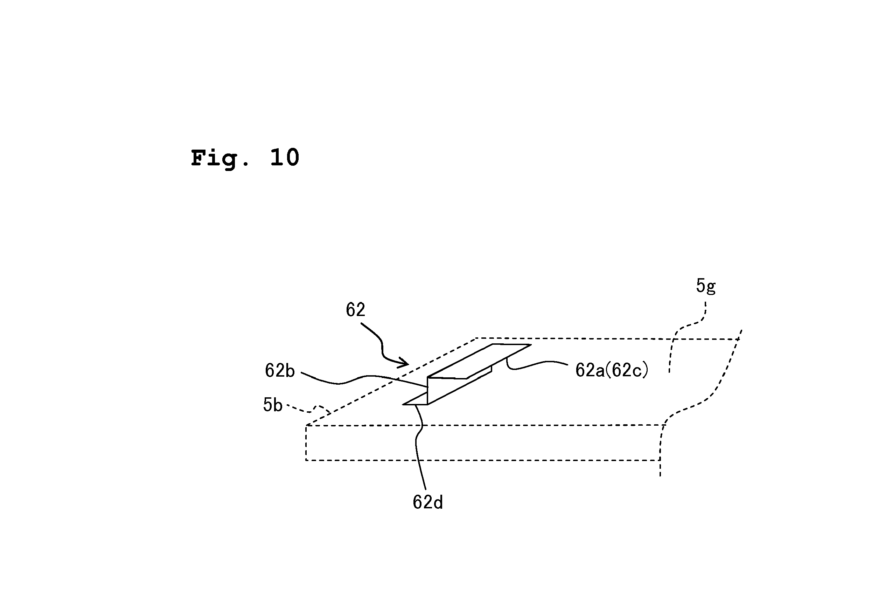

In the 1-2 modification, the flat plate attaching portion 62d is allowed to extend in the same direction as the extending direction of the flat plate portion 62a. However, as depicted in Fig. 10, the flat plate attaching portion 62d may extend in a direction opposite to the extending direction of the flat plate portion 62a. In this modification also, since the entire reformer support structure 6 is positioned above the reformer 5, it is possible to reduce the influence of the heat caused in the combustion area 10 on the reformer support structure 6.

### [1-4 modification]

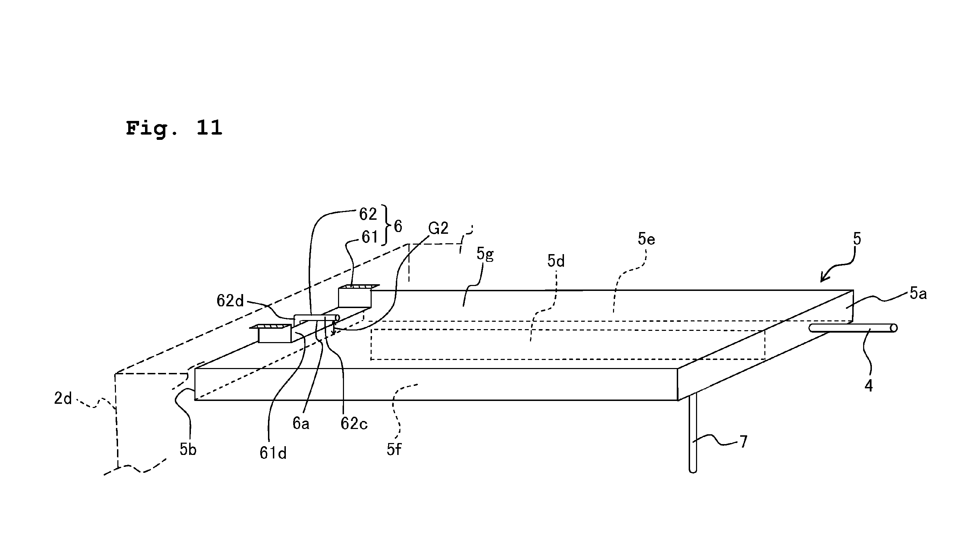

In the reformer support structure 6 of the above embodiment, the second member 62 is formed of the flat plate portion 62a and the vertical portion 62b. However, as depicted in Fig. 11, the second member 62 may be an elbow-shaped bending member having a horizontal portion 62c and a vertical portion 62d. The second member 62 is attached to the reformer 5 such that a part of the vertical portion 62d (the vicinity of lower end) is attached to the left side end 5b by welding and the like to form a predetermined gap G2 between the horizontal portion 62c and the upper surface 5g of the reformer 5. The line contact between the lower edge of the cylindrical horizontal portion 62c and the flat first engagement portion 61 d of the first member 61 makes the first member 61 be engaged with the second member 62 to form the linear engagement part 6a. As depicted in Fig. 11, it is desired that the second member 62 be positioned in the center of the reformer 5 in the short direction. Accordingly, the reformer support structure 6 can stably support the reformer 5 in a balanced manner.

### [1-5 modification]

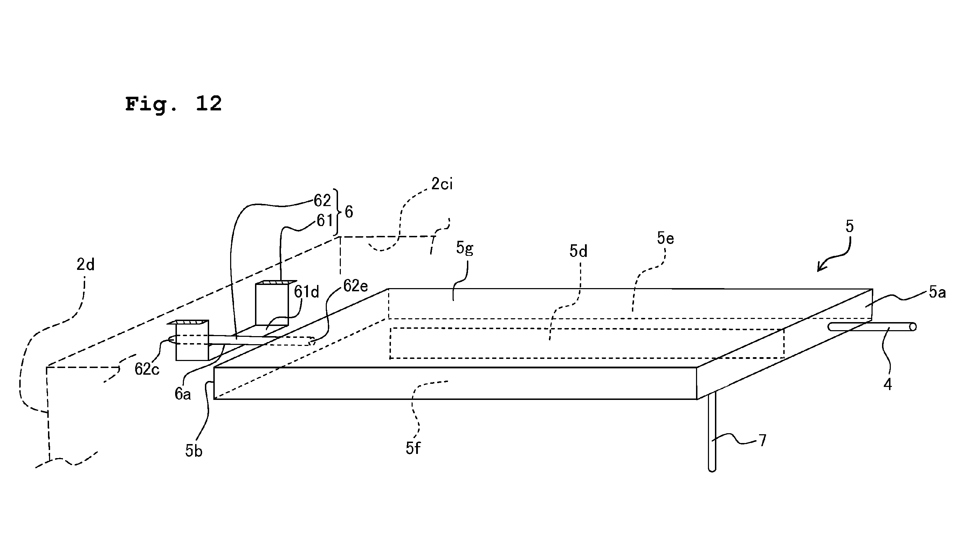

In the reformer support structure 6 of 1-4 modification, the second member 62 has a structure in which the horizontal portion 62c is bent inward of the reformer 5 from the vertical portion 62d. However, in the modification depicted in Fig. 12, the second member 62 is a rod-shaped member only having a cylindrical horizontal portion 62c. The second member 62 is attached to the reformer 5 such that one end 62e of the second member 62 is attached to the left side end 5b by welding and the like. The lower edge of the cylindrical horizontal portion 62c is engaged with the flat first engagement portion 61d of the first member 61 to form the linear engagement part 6a. As depicted in Fig. 12, it is desired that the second member 62 be positioned in the center of the reformer 5 in the short direction. By doing so, the reformer 5 can be stably supported in a balanced manner. Further, such an arrangement enables the attachment position of the first member 61 to the inner surface 2ci of the upper surface 2c of the module can body 2 to be further closer to the left side wall 2d of the module can body 2. Therefore, even when the module can body 2 is deformed due to the effect of heat during the operation of the fuel cell module 1, it is possible to further reduce the effect of the deformation on the reformer support structure 6.

### [1-6 modification]

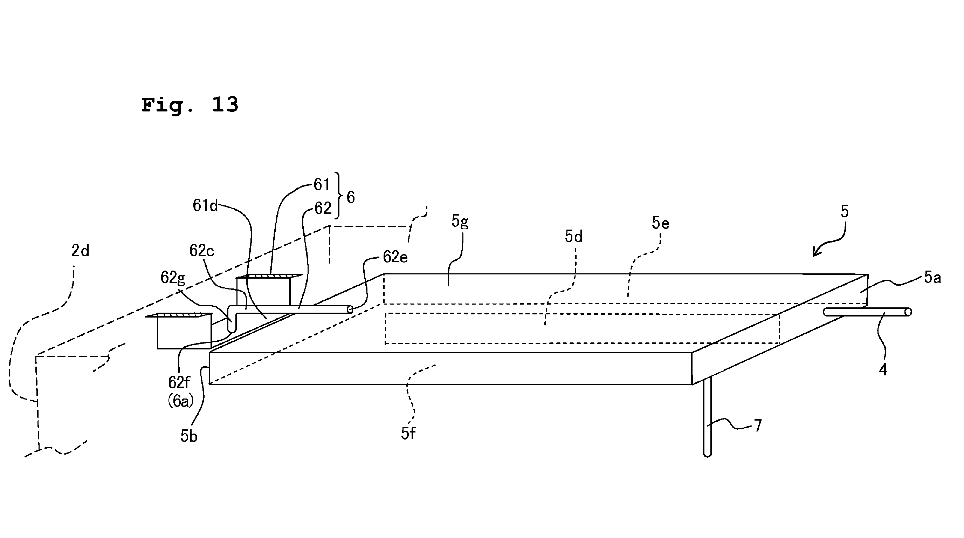

In the reformer support structure 6 of 1-5 modification, the second member 62 is the rod-shaped member only having the cylindrical horizontal portion 62c. However, in the modification depicted in Fig. 13, the second member 62 is an elbow-shaped member having a horizontal portion 62c, a vertical portion 62g extending downward of the reformer 5 from the horizontal portion 62c, and a left end 62f. The second member 62 is attached to the reformer 5 such that the vicinity of the right end 62e is attached to the upper surface 5g of the reformer 5 by welding and the like. Here, the left end 62f of the second member 62 is formed to have a hemispherical shape or a curved surface. Therefore, the left end 62f of the second member 62 makes a point contact with the flat first engagement portion 61d of the first member 61, and thus the second member 62 is engaged with the first member 61 to form the point-like engagement part 6a.

### [Second embodiment]

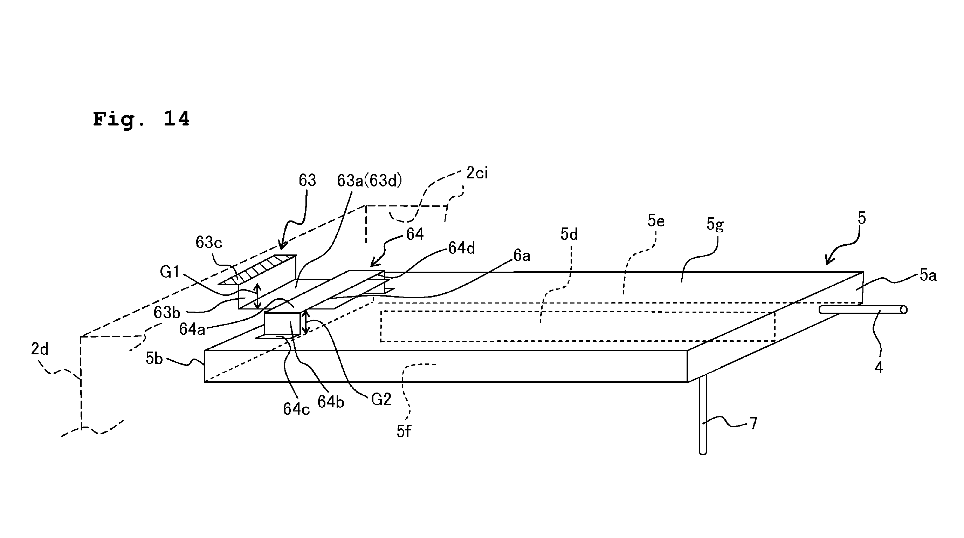

Subsequently, an explanation will be made about a second embodiment of the reformer support structure of the present invention while referring to Fig. 14. The characteristic of this embodiment is that the shapes of a first member 63 and a second member 64 of the reformer support structure 6 are different from the first embodiment. The respects other than the above characteristic are the same as the first embodiment, any explanation of which will be omitted.

The reformer support structure 6 of this embodiment is formed of the first member 63 attached to the inner surface 2ci of the upper plate 2c of the module can body 2 and the second member 64 attached to the reformer 5. Fig. 14 depicts the shape of the first member 63 of the reformer support structure 6. The first member 63 is a bending member having a substantially Z-shaped cross-section. The first member 63 includes a flat plate portion 63a extending in the short direction of the reformer 5, a suspending portion 63b which is bent from one end of the flat plate portion 63a and extends as it is, and a protruding portion 63c which is bent from the upper end of the suspending portion 63b and extends substantially parallel to the inner surface 2ci of the upper plate 2c of the module can body 2. The upper surface of the protruding portion 63c is attached to the inner surface 2ci of the upper plate 2c of the module can body 2 by welding and the like. In a case that the suspending portion 63b can be weld directly to the inner surface 2ci of the upper plate 2c, the protruding portion 63c can be omitted. A predetermined gap G1 is formed between the flat plate portion 63a and the inner surface 2ci of the upper plate 2c of the module can body 2. An upper surface 63d of the flat plate portion 63a is a first engagement portion (63d) to be engaged with the second member 64. The first member 63 can be formed, for example, by bending a flat plate such as stainless plate. It is desired that the position, in the inner surface 2ci of the upper surface 2c of the module can body 2, where the first member 63 is attached be a position as close as possible to the left side wall 2d of the module can body 2. It is possible to reduce the influence of deformation of the module can body 2 by attaching the first member 63 as close as possible to the left side wall 2d of the module can body 2. Accordingly, the reformer 5 can be supported more stably.

Fig. 14 depicts the protruding portion 63c of the first member 63 which extends in a direction opposite to the extending direction of the flat plate portion 63a, in the longitudinal direction of the reformer 5. The protruding portion 63c, however, may extend to face the flat plate portion 63a.

As depicted in Fig. 14, the second member 64 of the reformer support structure 6 is a bending plate having a substantially U-shaped cross-section. The second member 64 includes a flat plate portion 64a extending in the short direction of the reformer 5, a pair of vertical portions 64b, 64b which is bent downward from both ends of the flat plate portion 64a and extends as it is, and a pair of protruding portions 64c, 64c which is bent from the ends of the vertical portions 64b, 64b and extends substantially parallel to the upper surface 5g of the reformer 5. The lower surfaces of the protruding portions 64c, 64c are attached to the upper surface 5g of the reformer 5 by welding and the like. In a case that the vertical portions 64b can be weld directly to the upper surface 5g of the reformer 5, the protruding portions 64c can be omitted. A predetermined gap G2 is formed between the flat plate portion 64a and the upper surface 5g of the reformer 5. The lower surface 64d of the flat plate portion 64a is a second engagement portion (64d) to be engaged with the first member 63. By allowing the second engagement portion 64d to be brought into a surface contact with the flat first engagement portion 63d of the first member 63, the first member 63 is engaged with the second member 64 to form the surface-like engagement part 6a. The second member 64 can be formed, for example, by bending a flat plate such as stainless plate. As depicted in Fig. 14, it is desired that the second member 64 be positioned at the center in the short direction of the reformer 5. Accordingly, the reformer 5 can be stably supported in a balanced manner.

The shape of second member 64 is not limited to the shape having the substantially U-shaped cross-section, provided that the second member 64 includes the second engagement portion 64d to be engaged with the first engagement portion 63d of the first member 63. Thus, the second member 62 (see Figs. 5, 9, 10) used in the first embodiment can be used as the second member 64 of this embodiment. In such a case, the second member 62 is attached at a position where the second engagement portion 64d of the second member 62 is engaged with the first engagement portion 63d of the first member 63 in a state of being brought into a surface contact therewith, and the reformer 5 can be supported stably even in a case of the thermal expansion or contraction of the reformer 5.

In the reformer support structure 6 depicted in Fig. 14, the flat plate portion 63a of the first member 63 extends inward of the reformer 5 from the vertical portion 63b. However, the flat plate portion 63a of the first member 63 may extend outward of the reformer 5 from the vertical portion 63b. In this case also, the first member 63 is attached at a position where the first engagement portion 63d of the first member 63 is engaged with the second engagement portion 64d of the second member 64 in the state of being brought into the surface contact therewith, and the reformer 5 can be supported stably even in the case of the thermal expansion or contraction of the reformer 5.

### [2-1 modification]

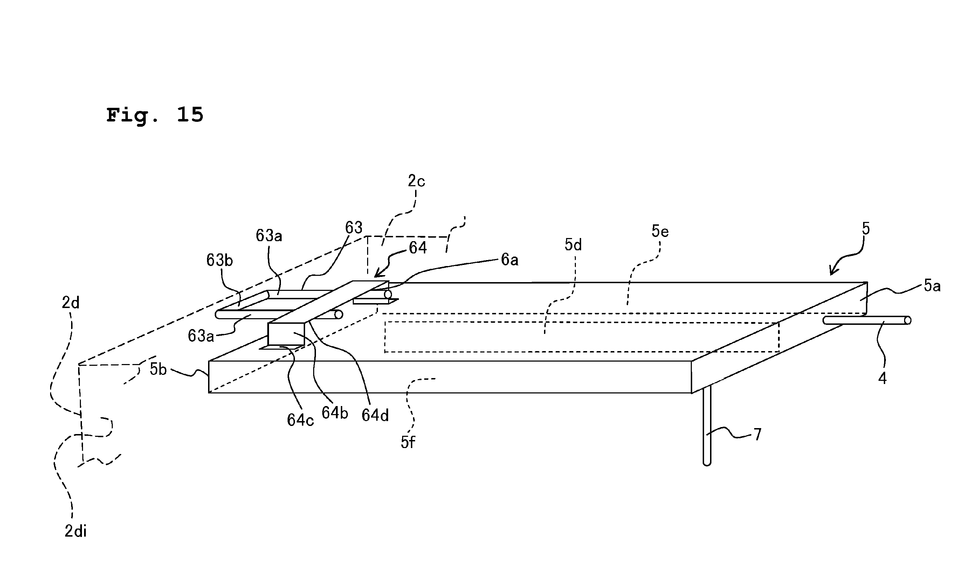

In the reformer support structure 6 of the above embodiment, the first member 63 is formed of the flat plate portion 63a, the suspending portion 63b, and the protruding portion 63c. As depicted in Fig. 15, however, it is allowable to use the first member 63 which is a rod-shaped member bent to be U-shaped and includes horizontal portions 63a, 63a and a connecting portion 63b. The first member 63 is attached to the module can body 2 such that the connecting portion 63b is attached to an inner surface 2di of the left side wall 2d by welding and the like. The line contact between the upper edges of the horizontal portions 63a and the flat second engagement portion 64d of the second member 64 makes the first member 63 be engaged with the second member 64 to form the linear engagement part 6a. Such an arrangement enables the first member 63 to be attached to the inner surface 2di of the left wall surface 2d of the module can body 2 at a position close to the upper surface 2c. Therefore, even when the module can body 2 is deformed owing to the heat during the operation of the fuel cell module 1, the influence of heat can be further reduced.

As another modification, a straight rod-shaped member having no bending portion may be used instead of the first member 63 depicted in Fig. 15. Or, instead of the first member 63 depicted in Fig. 15, the elbow-shaped member, which is depicted as the second member 62 in Fig. 13, may be used as the first member 63. In such a case, the hemispherical portion or the curved surface of the front end of the first member 63 may be brought into a point contact with the flat second engagement portion 64d of the second member 64.

### [Third embodiment]

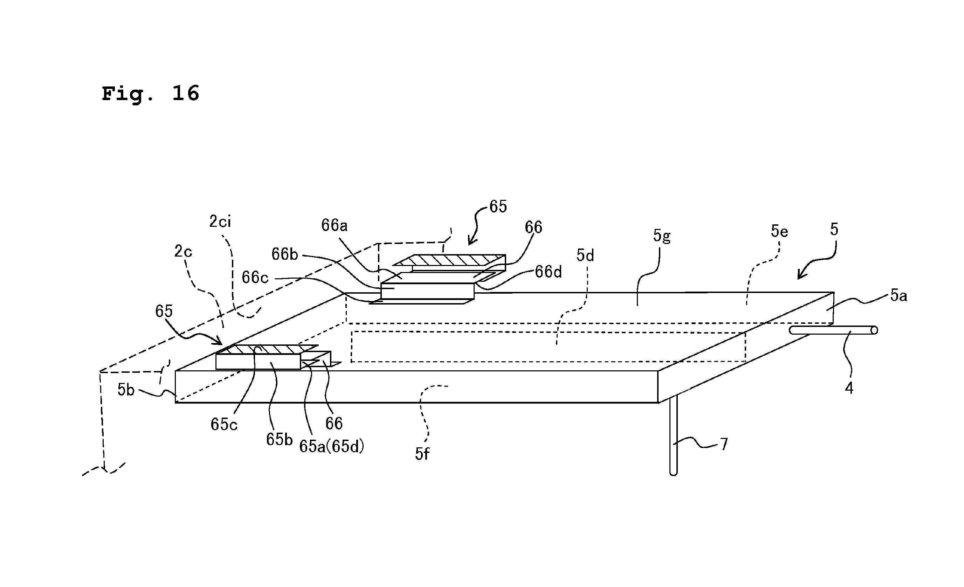

Subsequently, an explanation will be made about a third embodiment of the reformer support structure of the present invention while referring to Fig. 16. The characteristics of this embodiment are as follows. That is, the shapes and the attachment positions of a first member 65 and a second member 66 of the reformer support structure 6 are different from the first and second embodiments. The respects other than the above characteristics are the same as the first embodiment, any explanation of which will be omitted.

The reformer support structure 6 of this embodiment is formed of two first members 65 which are attached to the inner surface 2ci of the upper plate 2c of the module can body 2 respectively and two second members 66 which are attached to the reformer 5 respectively. Fig. 16 depicts the shape of each of the first members 65 of the reformer support structure 6. The first member 65 is a bending member having a substantially U-shaped cross-section. The first member 65 includes a flat plate portion 65a extending in the longitudinal direction of the reformer 5, a suspending portion 65b which is bent from one end of the flat plate portion 65a and extends as it is, and a protruding portion 65c which is bent from the upper end of the suspending portion 65b and extends substantially parallel to the inner surface 2ci of the upper plate 2c of the module can body 2. The upper surface of each of the protruding portions 65c is attached to the inner surface 2ci of the upper plate 2c of the module can body 2 by welding and the like. An upper surface 65d of each of the flat plate portions 65a is a first engagement portion (65d) to be engaged with one of the second members 66. The first member 65 can be formed, for example, by bending a flat plate such as stainless plate.

The first members 65 of this embodiment are respectively attached to the inner surface 2ci of the upper plate 2c of the module can body 2 at positions correspond to the front end and the rear end of the reformer 5 in the vicinity of the left side end 5b. Accordingly, the reformer 5 can be stably supported in a balanced manner.

Fig. 16 depicts the protruding portions 65c of the first members 65 which extend to face the flat plate portions 65a. The protruding portions 65c, however, may extend in a direction opposite to the extending direction of the flat plate portions 65a, in the short direction of the reformer 5. Alternatively, the upper ends of the suspending portions 65b may be weld directly to the inner surface 2ci of the upper plate 2c of the module can body 2 without using the protruding portions 65c.

As depicted in Fig. 16, each of the second members 66 of the reformer support structure 6 is a bending member having a substantially Z-shaped cross-section. The second member 66 includes a flat plate portion 66a extending in the longitudinal direction of the reformer 5, a vertical portion 66b which is bent from one end of the flat plate portion 66a and extends as it is, and a protruding portion 66c which is bent from the lower end of the vertical portion 66b and extends substantially parallel to the upper surface 5g of the reformer 5. The lower surfaces of the protruding portions 66c are attached to the upper surface 5g of the reformer 5 by welding and the like. A lower surface 66d of each of the flat plate portions 66a is a second engagement portion 66d to be engaged with one of the first members 65. By allowing the flat second engagement portion 66d to be brought into a surface contact with the flat first engagement portion 65d of the first member 65, the first member 65 is engaged with the second member 66 to form the surface-like engagement part 6a. The second member 66 can be formed, for example, by bending a flat plate such as stainless plate.

The shape of second member 66 is not limited to the shape having the substantially Z-shaped cross-section, provided that the second member 66 includes the second engagement portion 66d to be engaged with the first engagement portion 65d of the first member 65. The second member 62 (see Figs. 5 and 9) used in the first embodiment can be used as the second member 66 of this embodiment. In such a case, the second member 62 is attached to the reformer 5 at a position where the second engagement portion 62d of the second member 62 is engaged with the first engagement portion 65d of the first member 65 in a state of being brought into a surface contact therewith, and the reformer 5 can be supported stably even in the case of the thermal expansion or contraction of the reformer 5.

As another modification, instead of the first member 65 depicted in Fig. 16, the elbow-shaped member depicted in Fig. 11, the rod-shaped member depicted in Fig. 12, or the U-shaped member depicted in Fig. 15 may be used. In such a case, the linear engagement part 6a is formed by each of the members and the flat second engagement portion 66d of the second member 66. Or, instead of the first member 65 depicted in Fig. 16, the elbow-shaped member depicted in Fig. 13 may be used. In this case, the point-like engagement part is formed by the elbow-shaped member and the flat second engagement portion 66d of the second member 66.

As still another modification, instead of the second member 66 depicted in Fig. 16, the elbow-shaped member depicted in Fig. 11, the rod-shaped member depicted in Fig. 12, or the substantially U-shaped member depicted in Fig. 15 may be used. In such a case, the linear engagement part is formed by each of the members and the flat first engagement portion 65d of the first member 65. Or, instead of the second member 66 depicted in Fig. 16, the elbow-shaped member depicted in Fig. 13 may be used. In this case, the point-like engagement part is formed by the elbow-shaped member and the flat first engagement portion 65d of the first member 65.

In the above description, the reformer support structure and the fuel cell module using the reformer support structure of the present invention were explained by use of the embodiments and the modifications thereof. The present invention, however, is not limited to the specific examples, and the present invention can be modified within the scope of the present invention. In the above embodiments and the modifications, the first member is attached to the inner surface of the upper wall of the module can body. However, the attachment position of the first member is not limited to this. The first member may be attached to the inner surface of a side wall of the module can body, provided that the engagement part 6a where the first member is engaged with the second member is positioned above the bottom of the reformer. In this case, for example, the first member may be a flat plate member which connects or links the inner surfaces of side walls opposed to each other.

In the above embodiments and the modifications, the hydrogen-containing fuel and water vapor are supplied from the raw material supply pipe 4. However, the following configuration is also allowable. That is, a pipeline for supplying water vapor is provided separately from the raw material supply pipe 4, so that the hydrogen-containing fuel and water vapor are supplied to the reformer 5 through different pipelines respectively.

In the above embodiments and the modifications, the reformer 5 has the elongated box-shaped form. The shape of the reformer 5 is not limited to this shape. For example, the reformer 5 may be configured such that a plurality of bicylindrical reformers are arranged in a horizontal direction or such that a plurality of cylindrical reformers arranged in the horizontal direction are stacked with each other in a vertical direction.

In the above embodiments and the modifications, the reformer 5 has the structure that the hydrogen-containing fuel and water vapor supplied from the raw material supply pipe 4 to the end portion of the reformer 5 make a turn at the opposite end portion in the longitudinal direction of the reformer 5 and then they move to the reformed gas supply pipe 7. However, the structure of the reformer 5 is not limited to this structure. For example, a separation wall may be formed so that the hydrogen-containing fuel and water vapor make two or more turns in the reformer 5. Further, in the above embodiments and the modifications, the separation wall 5d is formed in the reformer 5 at the substantially center position in the front-rear direction of the reformer 5 (direction perpendicular to the longitudinal direction of the reformer 5 in the front-rear direction) to extend in the longitudinal direction in a state of being brought into contact with the right side end 5a, the bottom surface 5c, and an upper surface 5g, with the separation wall 5d being not brought into contact with the bottom surface 5c and the upper surface 5g in the vicinity of the left side end 5b. However, the separation wall 5d may be formed to extend in the longitudinal direction in a state of being brought into contact with the right side end 5a, a front portion 5h, and a rear portion 5i, with the separation wall 5d being not brought into contact with the front portion 5h and the rear portion 5i in the vicinity of the left side end 5b.

In the above embodiments and the modifications, the reformer 5 includes only the reforming unit which reforms the hydrogen-containing fuel and water vapor to generate the hydrogen-rich gas. However, the reformer 5 may include a vaporization unit.

In the above embodiments and the modifications, one end of the reformed gas supply pipe 7 is connected to the bottom surface 5c of the reformer 5 in the vicinity of the right side end 5a. However, the one end of the reformed gas supply pipe 7 may be connected to the right side end 5a.

In the above embodiments, the opening 2b of the module can body 2 is provided at the right side wall 2a. However, the opening 2b may be provided at the left side wall 2d so that the opening 2b is closed with a lid. The position of the opening 2b can be changed depending on the installation position and the installation manner of the support structure 6.

### Industrial Applicability

The reformer support structure of the present invention is capable of supporting the reformer without applying stress through the reformer support structure to the reformer even when the reformer expands or contracts depending on temperature change. Therefore, the use of the reformer support structure of the present invention can achieve the long service lives of the reformer and the fuel cell module using the reformer, and thus the fuel cell module can be used safely over a long period.

### Reference Signs List:

1: fuel cell module; 2: module can body; 3: module body; 4: raw material supply pipe; 5: reformer; 6: reformer support structure; 61: first member; 62: second member; 7: reformed gas supply pipe; 8: base; 9: fuel cell stack; 9a: fuel cell; 10: combustion area; 11: oxidizer supply portion; 12: exhaust gas port

## Claims

1. A reformer support structure for a fuel cell module, the fuel cell module including a fuel cell body which includes a cell stack and a reformer disposed above the cell stack, and a housing which contains the fuel cell body, the reformer support structure comprising:
a first member which includes a first engagement portion and is attached to the housing; and
a second member which includes a second engagement portion and is attached to the reformer,
wherein the reformer is supported by the housing by engaging the second engagement portion with the first engagement portion;
an engagement part where the second engagement portion is engaged with the first engagement portion is provided above a bottom of the reformer; and
the second engagement portion is slidable on the first engagement portion in a direction of thermal expansion of the reformer.

2. The reformer support structure according to claim 1, wherein the reformer has a pair of ends facing each other in the direction of the thermal expansion;
a raw material supply pipe is attached to one of the pair of ends; and
the engagement part is provided at a position which is closer to the other of the pair of ends than to the one of the pair of ends in the direction of the thermal expansion of the reformer.

3. The reformer support structure according to claim 1 or 2, wherein the engagement part is formed by a surface contact, a line contact, or a point contact between the first engagement portion and the second engagement portion.

4. The reformer support structure according to claims 1 to 3, wherein a combustion area is defined between the reformer and the cell stack; and
the first member is provided at a position outside the combustion area as the fuel cell module is viewed from above.

5. The reformer support structure according to any one of claims 1 to 4, wherein a combustion area is defined between the reformer and the cell stack; and
the second member is provided at a position outside the combustion area.

6. The reformer support structure according to any one of claims 1 to 5, wherein the reformer has a pair of ends facing each other in the direction of the thermal expansion;
a raw material supply pipe is attached to one of the pair of ends; and
the first member is attached to the housing in a vicinity of the other of the pair of ends of the reformer.

7. The reformer support structure according to any one of claims 1 to 6, wherein the reformer has a pair of ends facing each other in the direction of the thermal expansion;
a raw material supply pipe is attached to one of the pair of ends; and
the second member is attached to the other of the pair of ends of the reformer or a vicinity thereof.

8. The reformer support structure according to any one of claims 1 to 7, wherein the first member is attached to an upper inner surface of the housing.

9. The reformer support structure according to any one of claims 1 to 8, wherein the second member is disposed on an upper surface of the reformer.

10. The reformer support structure according to any one of claims 1 to 9, wherein at least a part of the first member has a substantially L-shaped form.

11. The reformer support structure according to any one of claims 1 to 9, wherein at least a part of the first member has a substantially U-shaped form.

12. The reformer support structure according to any one of claims 1 to 11, wherein at least a part of the second member has a substantially L-shaped form.

13. The reformer support structure according to any one of claims 1 to 11, wherein at least a part of the second member has a substantially U-shaped form.

14. The reformer support structure according to any one of claims 1 to 13, wherein the reformer has an elongated box-shaped form and a longitudinal direction of the reformer is the direction of the thermal expansion of the reformer.

15. A fuel cell module comprising the reformer support structure as defined in any one of claims 1 to 14.
